# FASCICULE DE BREVET EUROPEEN

(11) **EP 3 921 540 B1**
(45) Date de publication et mention de la délivrance du brevet: **14.12.2022**
(21) Numéro de dépôt: 20709644.7
(22) Date de dépôt: 04.02.2020
(51) Int. Cl.: F03H 1/00, B64G 1/40

(54) **RÉSERVOIR DE PROPULSEUR AVEC SYSTÈME DE COMMANDE MARCHE-ARRÊT DU FLUX DE GAZ, PROPULSEUR ET ENGIN SPATIAL INTÉGRANT UN TEL SYSTÈME DE COMMANDE**
TREIBSTOFFTANK MIT EINEM EIN/AUS-STEUERUNGSSYSTEM FÜR DIE STRÖMUNG VON TREIBGAS UND RAUMFAHRZEUG MIT SOLCH EINEM STEUERUNGSSYSTEM
PROPELLANT TANK WITH ON-OFF CONTROL SYSTEM FOR THE FLOW OF PROPELLANT GAS AND SPACECRAFT INCORPORATING SUCH A CONTROL SYSTEM

(30) Priorité: 06.02.2019 FR 1901159
(43) Date de publication de la demande: 15.12.2021
(73) Titulaire: ThrustMe, 91370 Verrieres-Le Buisson (FR)
(72) Inventeur: RAFALSKYI, Dmytro, 91400 ORSAY (FR); MARTINEZ MARTINEZ, Javier, 75014 PARIS (FR)
(74) Mandataire: Jacobacci Coralis Harle
(86) Numéro de dépôt international: PCT/FR2020/050186
(87) Numéro de publication internationale: WO 2020/161434

(56) Documents cités:
- FR-A1- 3 040 442
- US-A1- 2013 026 920
- US-B1- 6 609 363
- US-B1- 9 334 855
- KURT A. POLZIN ET AL: "Iodine Hall Thruster Propellant Feed System for a CubeSat", 50TH AIAA/ASME/SAE/ASEE JOINT PROPULSION CONFERENCE, 28 juillet 2014 (2014-07-28), XP055292310, Reston, Virginia DOI: 10.2514/6.2014-3915 ISBN: 978-1-62410-303-2

## Description

La présente invention concerne le domaine technique des propulseurs, en particulier des propulseurs spatiaux. Les propulseurs spatiaux trouvent notamment des applications dans le domaine spatial ou astronautique.

Plus précisément, l'invention concerne un propulseur comprenant un réservoir d'agent propulsif (« propellant » en anglais) sous forme solide ou liquide et des moyens de contrôle du flux de gaz formé à partir de l'agent propulsif.

L'invention concerne en particulier un propulseur ionique ou un propulseur à plasma, le réservoir d'agent propulsif étant intégré ou à distance d'une chambre d'ionisation, respectivement d'une chambre à plasma.

Dans le domaine ci-dessus, différents types de propulseurs sont connus, notamment les propulseurs ioniques (« ion thruster» en terminologie anglo-saxonne), à gaz froid, propulseur colloïde (ou à électrospray), à effet Hall ou encore à effet de champ (noté FEEP pour « field-emission electric propulsion » en terminologie anglo-saxonne).

Le document de brevet US2013026920 A1 décrit un réservoir de propulseur, le réservoir étant adapté pour stocker un agent propulsif (iode) solide ou liquide, le réservoir comprenant des moyens de chauffage pour former un gaz à partir de l'agent propulsif solide ou liquide dans le réservoir, le réservoir comportant une ouverture pour extraire du réservoir un flux du gaz d'agent propulsif.

Le document de brevet FR3020235_A1 décrit un propulseur ionique comprenant un dispositif de formation d'un faisceau quasi-neutre d'ions et d'électrons, un réservoir relié par un conduit de gaz à une chambre à plasma et des moyens d'extraction et d'accélération d'un faisceau quasi-neutre d'ions et d'électrons hors de la chambre à plasma. Les gaz utilisables peuvent être choisis, en fonction de leur électropositivité ou électronégativité, parmi l'argon (Ar), l'hydrazine (N₂H₄), le xénon (Xe), le tétrafluorure de carbone (CF₄), l'hexafluorure de soufre (SF₆), le diiode (I₂), le diazote (N₂) ou le dihydrogène (H₂).

Le document de brevet US 7 059 111 décrit un propulseur à plasma intégrant un réservoir d'agent propulsif à l'état liquide. Toutefois, ce propulseur utilise un système additionnel d'électrodes pour contrôler le débit de gaz sortant du réservoir.

Le document de brevet FR3040442_A1 décrit un propulseur ionique à grille intégrant un réservoir d'agent propulsif solide dans une chambre à plasma. Des moyens de chauffage du réservoir sont prévus pour sublimer l'agent propulsif solide et former un gaz à l'intérieur du réservoir. L'agent propulsif à l'état de gaz passe dans la chambre à plasma au travers d'au moins un orifice du réservoir dont la surface est dimensionnée au cas par cas pour un ensemble de paramètres de fonctionnement déterminé en fonction de l'agent propulsif utilisé, la pression et la température. L'utilisation d'agent propulsif stocké à l'état solide dans le réservoir présente plusieurs avantages, notamment de compacité du réservoir et de fiabilité à coût réduit. Le diamètre de l'orifice de sortie du gaz étant fixe, le contrôle du débit d'agent propulsif à l'état de gaz s'effectue par un contrôle de la température du réservoir qui a l'inconvénient d'avoir de l'inertie. De plus, ce propulseur peut présenter des fuites de gaz lorsque le propulseur est à l'arrêt.

Afin de remédier aux inconvénients précités de l'état de la technique, la présente invention propose un réservoir de propulseur, le réservoir étant adapté pour stocker un agent propulsif solide ou liquide, le réservoir comprenant des moyens pour former un gaz à partir de l'agent propulsif solide ou liquide dans le réservoir, le réservoir comportant une ouverture de surface S pour extraire du réservoir un flux du gaz d'agent propulsif.

Selon l'invention, le réservoir comporte un système de commande marche-arrêt du flux de gaz comprenant une grille disposée face à l'ouverture du réservoir, un premier système de régulation thermique adapté pour réguler la température du gaz dans le réservoir et un deuxième système de régulation thermique adapté pour réguler la température de la grille, la grille comportant des orifices de surface totale supérieure à la surface S de l'ouverture du réservoir, les premier et deuxième systèmes de régulation thermique étant configurés pour ajuster une différence de température entre la température du gaz dans le réservoir et la température de la grille, la différence de température étant variable entre une première valeur supérieure à un seuil adapté pour transmettre le flux de gaz à travers la grille et une deuxième valeur inférieure à un autre seuil où le gaz forme un dépôt solide sur la grille pour obturer les orifices de la grille. Le dépôt solide sur la grille permet de réduire le flux de gaz sortant en dessous d'un seuil prédéterminé.

D'autres caractéristiques non limitatives et avantageuses du réservoir d'agent propulsif conforme à l'invention, prises individuellement ou selon toutes les combinaisons techniquement possibles, sont les suivantes.

Le premier système de régulation thermique comprend un dispositif de chauffage adapté pour chauffer le réservoir et/ou le deuxième système de régulation thermique comprend un autre dispositif de chauffage adapté pour chauffer la grille.

De façon avantageuse le dispositif de chauffage et/ou l'autre dispositif de chauffage comprend un dispositif chauffant électrique, une bande conductrice, un circuit chauffant de type caloduc, une boucle convective fluidique, un radiateur, un module thermoélectrique à effet Peltier et/ou un matériau à changement de phase (MCPs) ou encore tout autre dispositif actif ou passif adapté pour contrôler un transfert de chaleur.

Le deuxième système de régulation thermique comporte en outre un dispositif de refroidissement de la grille.

Le premier système de régulation thermique comporte un capteur de température adapté pour mesurer une température représentative de la température du gaz dans le réservoir et/ou le deuxième système de régulation thermique comporte un autre capteur de température adapté pour mesurer une autre température représentative de la température de la grille.

Le réservoir comporte une enceinte et une plaque, un dispositif d'étanchéité et d'isolation thermique disposé entre l'enceinte et la plaque, la plaque comportant l'ouverture du réservoir, la grille étant fixée à la plaque.

La grille est une grille à mailles filaire ou la grille comporte une lame comprenant les orifices.

les orifices présentent une rugosité de surface adaptée pour le dépôt solide dépôt d'agent propulsif.

Les orifices ont par exemple une forme géométrique en carré, rectangle ou losange. Les orifices de la grille peuvent avoir une distribution spatiale suivant un réseau périodique à une ou deux dimensions. En variante, les orifices de la lame ont une distribution spatiale variable radialement par rapport au centre de l'ouverture, la distribution spatiale des orifices étant plus dense soit au centre soit en périphérie de la grille, de manière à répartir le flux de gaz sortant.

L'agent propulsif comporte un composant choisi parmi les composants suivants : diiode, bismuth, césium, cadmium, étain, indium, gallium, germanium, lithium, mercure, de l'adamantane, du ferrocène, de l'arsenic, du polychlorure de vinyle (PVC), du polyimide (ou Kapton^{®}) ou du polytétrafluoroéthylène (ou téflon^{®}).

Le réservoir peut en outre comporter une vanne de régulation adaptée pour modifier le débit du gaz sortant du réservoir.

L'invention concerne aussi un propulseur comprenant un réservoir selon l'un des modes de réalisation décrits, le propulseur étant choisi parmi les types de propulseur suivants : propulseur ionique, à plasma, à gaz froid, colloïde (à électrospray), à effet Hall ou à effet de champ.

D'autres caractéristiques non limitatives et avantageuses du propulseur conforme à l'invention, prises individuellement ou selon toutes les combinaisons techniquement possibles, sont les suivantes.

Le propulseur étant respectivement de type ionique, à plasma ou à gaz froid, le réservoir est séparé respectivement d'une chambre d'ionisation ou d'une chambre à plasma ou d'une tuyère de sortie, dans le cas d'un propulseur à gaz froid, une conduite de gaz reliant le réservoir à la chambre d'ionisation ou la chambre à plasma ou la tuyère de sortie, respectivement.

Le réservoir est intégré dans une chambre à plasma ou une chambre d'ionisation.

L'invention concerne aussi un engin spatial, de type satellite ou sonde spatiale, comprenant un propulseur selon l'un des modes de réalisation décrits.

L'invention concerne aussi un procédé de commande marche-arrêt du flux du gaz d'agent propulsif en sortie d'un réservoir d'agent propulsif stocké sous forme solide ou liquide selon l'un des modes de réalisation décrits, le procédé comprenant les étapes suivantes : formation d'un gaz à partir de l'agent propulsif solide ou liquide dans le réservoir, régulation thermique de la température du gaz dans le réservoir et régulation thermique de la température de la grille de manière à ajuster une différence de température entre la température du gaz dans le réservoir et la température de la grille, la différence de température étant variable entre une première valeur supérieure à un seuil adapté pour transmettre le flux de gaz à travers la grille sans dépôt solide d'agent propulsif et une deuxième valeur inférieure à un autre seuil où le gaz forme un dépôt solide sur la grille pour obturer les orifices de la grille.

L'invention permet un contrôle rapide de type marche-arrêt du flux de gaz sortant du réservoir pour tout gaz condensable. Dans le présent document, on entend par gaz condensable une substance capable de passer de l'état gazeux à l'état solide à une température atteignable avec les moyens de refroidissement du réservoir de propulseur ou du propulseur ou de l'engin spatial intégrant le réservoir. De plus, l'invention permet de limiter les fuites de gaz lorsque le propulseur est à l'arrêt. Ce contrôle marche-arrêt du flux de gaz sortant du réservoir est réversible : en chauffant la grille, le dépôt solide est sublimé et le flux du gaz est rétabli. L'invention est compatible avec de nombreux propulseurs spatiaux. En particulier, l'invention trouve des applications dans un propulseur ionique dans lequel le réservoir est intégré à la chambre à plasma ou à distance de la chambre à plasma. L'invention trouve aussi des applications dans un propulseur à gaz froid, où le réservoir constitue la partie principale du propulseur.

L'invention propose également un engin spatial, par exemple un satellite ou une sonde spatiale, comprenant un tel système de régulation par commande marche-arrêt du flux du gaz d'agent propulsif.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig. 1] est une vue en coupe schématique d'un réservoir muni d'un système de commande marche-arrêt du flux du gaz d'agent propulsif selon l'invention,
[Fig. 2] est une vue schématique d'une grille de structure filaire d'un système de régulation du flux du gaz d'agent propulsif selon un premier mode de réalisation,
[Fig. 3] est une vue schématique d'une grille de structure filaire d'un système de régulation du flux du gaz d'agent propulsif selon une variante du premier mode de réalisation, avec une vue en coupe d'une maille dont les fils présentent une rugosité de surface,
[Fig. 4] représente deux autres exemples de grilles formées par usinage d'orifices dans une lame pour un système de régulation du flux du gaz d'agent propulsif selon un deuxième mode de réalisation,
[Fig. 5] représente deux autres exemples de grilles formées par usinage d'orifices dans une lame où la disposition des orifices est spécialement adaptée pour un système de régulation du flux du gaz d'agent propulsif selon une variante du deuxième mode de réalisation,
[Fig. 6] est une vue en coupe schématique de la sortie du réservoir en mode blocage,
[Fig. 7] représente deux courbes de mesure de température de la plaque de fond du réservoir (pour T1) et respectivement de la plaque comportant l'ouverture de sortie (pour T2) en fonction du temps, illustrant le fonctionnement des deux systèmes de régulation thermiques indépendants dans un système de commande marche-arrêt du flux du gaz d'agent propulsif selon l'invention, et une mesure simultanée du débit massique (F) de gaz en fonction du temps en sortie du réservoir,
[Fig. 8] représente schématiquement un propulseur ionique ou un propulseur à plasma selon un premier mode de réalisation intégrant un réservoir dans une chambre d'ionisation ou, respectivement, une chambre à plasma ;
[Fig. 9] représente schématiquement un propulseur ionique ou un propulseur à plasma selon un deuxième mode de réalisation comprenant un réservoir à distance d'une chambre d'ionisation ou d'une chambre à plasma, respectivement,
[Fig. 10] représente schématiquement un satellite ou une sonde spatiale comprenant un propulseur ionique selon l'invention,
[Fig. 11] représente schématiquement un exemple de courbes de températures de consigne pour la température T1 à l'intérieur du réservoir et la température T2 de la plaque de sortie du réservoir.

Il est à noter que sur ces figures les éléments structurels et/ou fonctionnels communs aux différentes variantes peuvent présenter les mêmes références.

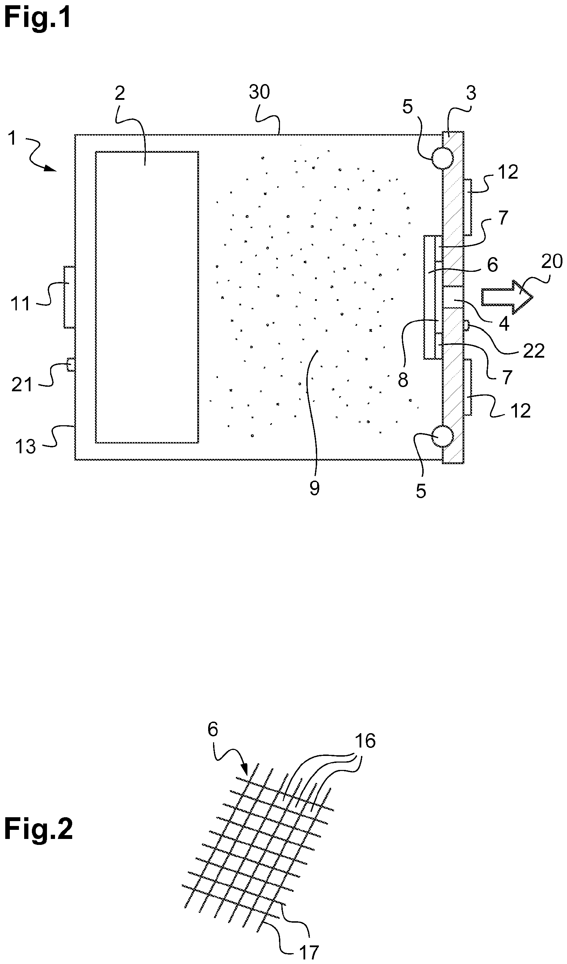

La figure 1 représente un réservoir 1 contenant un agent propulsif 2. L'agent propulsif est stocké dans le réservoir à l'état solide ou liquide à température ambiante. Dans le présent document, lorsque le réservoir est sur terre, la température ambiante est comprise entre 5 et 25 degrés dans le cas du diiode.

L'agent propulsif solide ou liquide comporte au moins un composant chimique choisi parmi les composants suivants : diiode (I₂), bismuth (Bi), césium (Ce), cadmium (Cd), étain (Sn), indium (In), gallium (Ga), germanium (Ge), lithium (Li), mercure (Hg), de l'adamantane (formule chimique brute : C₁₀H₁₆), du ferrocène (formule chimique brute : Fe(C₅H₅)₂), de l'arsenic, du PVC, du polyimide (aussi appelé commercialement Kapton^{®}) ou du PTFE (Polytétrafluoroéthylène, de formule chimique (C₂F₄)ₙ aussi appelé commercialement téflon^{®}). De préférence, l'agent propulsif solide est du diiode (I₂) ou un mélange de diiode avec d'autres composants chimiques.

Le réservoir 1 comporte ici deux parties : une enceinte 30 et une plaque 3. L'agent propulsif 2 est disposé dans l'enceinte 30 du réservoir 1. Selon le type de propulseur, l'agent propulsif est stocké dans le réservoir à l'état solide ou liquide. Toutefois, l'agent propulsif est de préférence stocké à l'état solide pour augmenter la densité de stockage, autrement dit pour réduire l'encombrement du réservoir. L'enceinte 30 est par exemple de forme cylindrique fermée à une extrémité par un fond 13. La plaque 3 vient fermer l'autre extrémité de l'enceinte 30. La plaque 3 comporte au moins une ouverture 4 ayant une surface totale notée S. Par exemple, l'ouverture 4 est circulaire, et a un diamètre de l'ordre de 0.1 mm, ce qui permet de générer un débit de gaz de l'ordre de 0.05 mg/s. Un joint 5 d'étanchéité aux fuites est placé entre la plaque 3 et l'enceinte 30 du réservoir. Le joint 5 d'étanchéité est choisi pour présenter une faible conductivité thermique, par exemple d'environ 0.05 W/(m·K), afin d'isoler thermiquement la plaque 3 vis-à-vis de l'enceinte 30 du réservoir 1. Le joint 5 d'étanchéité de faible conductivité thermique est par exemple un joint torique, choisi parmi un joint Viton^{®} ou une insertion isolante en dioxyde de zirconium (ZrO₂) ou un isolant en PTFE.

Une grille 6 est fixée à la plaque 3 face à l'ouverture 4. La grille 6 comporte des orifices 16. La grille 6 présente une surface de croissance par dépôt ou solidification de cristaux d'agent propulsif qui aboutit à un réseau cristallin dense de cristaux d'agent propulsif bloquant partiellement ou totalement la sortie du gaz à travers l'ouverture 4. Comme détaillé ci-dessous, la grille 6 est utilisée comme support pour déposer le gaz condensable face à l'ouverture 4 de manière à stopper le flux de gaz d'agent propulsif et, inversement, la grille 6 est utilisée pour sublimer les cristaux déposés sur cette grille 6 de manière à laisser passer le flux de gaz d'agent propulsif à travers l'ouverture 4.

La grille 6 est par exemple de structure filaire à maille régulière comme illustré sur la figure 2. La grille 6 filaire est formée par des fils 17 torsadés, en général métalliques. La grille 6 filaire est plane et située dans un plan XY dans un repère orthonormé XYZ. A titre d'exemple non limitatif, la grille 6 est fabriquée en tungstène. Les orifices 16 peuvent être par exemple de forme géométrique, en carré, rectangle ou losange.

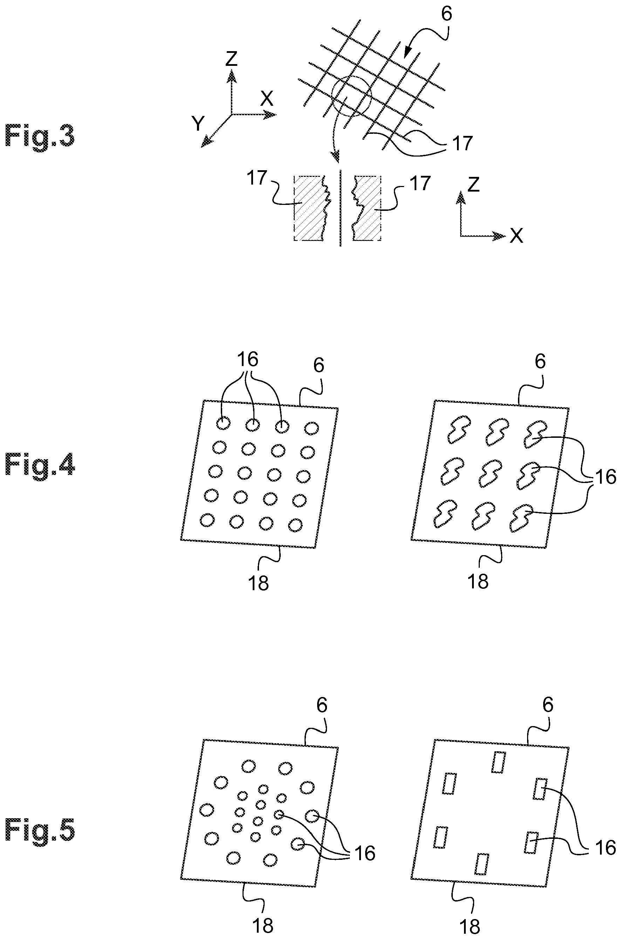

Selon une variante particulière et avantageuse, illustrée sur la figure 3, les fils 17 de la grille à maille n'ont pas une surface lisse mais présentent une rugosité de surface (voir sur la figure 3 la vue en coupe d'un détail d'une maille dans un plan XZ orthogonal au plan XY de la grille). Cette rugosité de surface des fils 17 autour des orifices 16 favorise la croissance par dépôt ou solidification de cristaux d'agent propulsif qui permet d'obtenir un réseau cristallin dense bloquant partiellement ou totalement les orifices 16 de la grille 6 et par conséquent la sortie du gaz à travers l'ouverture 4.

De façon alternative, la grille est formée dans une lame 18 plane, par exemple métallique, dans laquelle des orifices 16 sont usinés (voir figures 4 et 5). Les orifices usinés ont une forme géométrique, par exemple cylindrique ou conique et de section circulaire (voir figure 4 à gauche), carrée, rectangulaire (voir figure 5 à droite) ou encore de section irrégulière (voir figure 4 à droite). Comme illustré sur la figure 4, les orifices 16 peuvent être répartis spatialement suivant un réseau périodique à deux dimensions. Dans une variante illustrée sur la figure 5, la distribution spatiale des orifices 16 de la grille est avantageusement ajustée de manière à répartir le flux de gaz sortant à travers l'ouverture 4. Par exemple, la densité d'orifices est plus importante au centre de la grille ou en périphérie de la grille (voir figure 5).

Les dimensions des orifices 16 de la grille 6, prises dans le plan de la grille, sont choisies en fonction du débit massique du gaz de l'agent propulseur et du diamètre de l'ouverture 4. Sur la figure 4, les orifices 16 d'une même grille ont tous les mêmes dimensions. Sur la figure 5 à gauche, les dimensions des orifices varient radialement, les orifices au centre ayant un diamètre plus faible que les orifices situés en périphérie de la grille. Selon le type de propulseur, le diamètre de l'ouverture 4 est généralement compris entre 0.05 mm et 5 mm. A titre d'exemple non limitatif, les dimensions des orifices 16 de la grille 6, prises dans le plan de la grille, sont comprises entre 10 micromètres et 1 mm, par exemple de l'ordre de 0,1 mm. L'épaisseur de la plaque 18 est comprise entre 10 µm et 5 mm.

Quelle que soit la structure de la grille 6, la surface totale des orifices 16 de la grille 6 est supérieure à la surface S de l'ouverture 4 de la plaque 3. La surface totale des orifices 16 est ici prise dans le plan de la grille 6. De préférence, la surface totale des orifices 16 de la grille 6 est supérieure d'au moins un ordre de grandeur à la surface totale S de l'ouverture 4 de la plaque 3. De cette manière, lorsque les orifices de la grille sont ouverts, la grille 6 ne limite pas le débit de gaz à travers l'ouverture 4.

Dans l'exemple illustré sur la figure 1, une cale 7 est placée entre la grille 6 et la plaque 3. La cale 7 comporte aussi une ouverture de surface supérieure à la surface S de l'ouverture 4 de la plaque 3. La cale 7 est par exemple de forme annulaire. La grille 6 et la plaque 3 sont fixées de manière étanche à la cale 7. La cale 7 délimite ainsi un plenum entre la grille 6 et l'ouverture 4. La cale 7 évite un contact entre la grille et la face interne de la plaque 3. La cale 7 a par exemple une épaisseur d'environ 1 mm à 2 mm et un diamètre d'ouverture supérieur d'un ordre de grandeur au diamètre de l'ouverture 4 de sortie.

Le réservoir est muni d'un premier système de régulation thermique. Le premier système de régulation thermique comprend un dispositif de chauffage 11 par exemple un circuit chauffant de type dispositif chauffant électrique, bande conductrice, caloduc, boucle convective fluidique, un radiateur, un matériau à changement de phase ou un module thermoélectrique à effet Peltier. Le dispositif de chauffage 11 est par exemple fixé à l'extérieur, sur le fond 13 du réservoir 1. Lorsque l'agent propulsif 2 est stocké à l'état solide, respectivement liquide, dans le réservoir, le dispositif de chauffage 11 est adapté pour chauffer l'enceinte 30 de manière à sublimer, respectivement évaporer, l'agent propulsif 2 à l'état solide, respectivement liquide, et former un gaz 9 de cet agent propulsif dans le réservoir.

De façon avantageuse, le premier système de régulation thermique comporte un capteur de température 21 disposé à proximité du dispositif de chauffage 11, par exemple sur le fond 13 à l'extérieur du réservoir 1. Le capteur de température 21 permet de mesurer une température T1 du fond 13 du réservoir qui est fonction de la quantité de chaleur émise par le premier système de régulation thermique 11. Un système et procédé d'étalonnage permet d'évaluer la température à l'intérieur du réservoir en fonction de la température T1 mesurée.

Un deuxième système de régulation thermique comprend un autre dispositif de chauffage 12 par exemple un autre circuit chauffant de type dispositif chauffant électrique, bande conductrice, caloduc, boucle convective fluidique, un radiateur, un matériau à changement de phase ou un module thermoélectrique à effet Peltier. L'autre dispositif de chauffage 12 est adapté pour chauffer la plaque 3 et chauffer la grille 6 par exemple par conduction et/ou convection. Le joint 5 d'étanchéité permet d'isoler thermiquement la plaque 3 par rapport à l'enceinte 30 du réservoir de manière à pouvoir chauffer ou refroidir la plaque 3 indépendamment de l'enceinte 30 et réciproquement.

Avantageusement, le deuxième système de régulation thermique comprend un autre capteur de température 22. L'autre capteur de température 22 est disposé à proximité de la grille 6 et du deuxième système de régulation thermique 12 par exemple sur la plaque 3 à l'extérieur du réservoir 1 et à proximité de l'ouverture 4. L'autre capteur de température 22 permet de mesurer une autre température T2 qui est fonction de la quantité de chaleur émise par le deuxième système de régulation thermique 12. Le système et procédé d'étalonnage permet d'évaluer la température de la grille 6 en fonction de la température T2.

Les capteurs de température 21, 22 sont par exemple des capteurs thermorésistifs, tels que les capteurs de température résistifs PT100.

De plus, un système électronique permet d'ajuster la température T1 au moyen du dispositif de chauffage 11 relativement indépendamment de la température T2 contrôlée par l'autre dispositif de chauffage 12. Le dispositif de chauffage 11 et le l'autre dispositif de chauffage 12 sont reliés à une source d'énergie (non représentée). Le domaine de température de fonctionnement du système dépend de l'agent propulsif utilisé et du domaine de fonctionnement en pression et température du propulseur. La gamme de température T1 est adaptée pour permettre l'évaporation ou la sublimation de l'agent propulsif dans le réservoir. La gamme de température T2 est adaptée pour permettre, d'une part, le dépôt sous forme solide de l'agent propulsif sur la grille 6, lors du blocage de la grille 6, et, d'autre part, la sublimation de l'agent propulsif déposé sur la grille 6, lors du déblocage de la grille. A titre d'exemple non limitatif, l'agent propulsif étant du diiode, la température de dépôt s'étend de la température ambiante à environ 120°C et de préférence on ajuste T1 et T2 entre 40°C et 120 °C.

De façon optionnelle, le premier système de régulation thermique comporte en outre des moyens de refroidissement de l'enceinte 30 du réservoir 1. Les moyens de refroidissement comprennent par exemple un circuit de refroidissement faisant circuler un fluide caloporteur ou un module thermoélectrique à effet Peltier ou encore par rayonnement infrarouge. De manière analogue, en option, le deuxième système de régulation thermique comporte d'autres moyens de refroidissement de la plaque 3. Les autres moyens de refroidissement comprennent par exemple un autre circuit de refroidissement faisant circuler un fluide caloporteur ou un module thermoélectrique à effet Peltier ou encore par un dispositif de rayonnement infrarouge. En variante, l'enceinte 30 et/ou la plaque 3 comportent un revêtement extérieur comprenant une peinture adaptée pour rayonner la chaleur. De façon alternative ou complémentaire, le réservoir est conçu pour former lui-même un radiateur.

Nous détaillons maintenant le fonctionnement du système de commande marche-arrêt du flux de gaz sortant du réservoir. Ce système de commande (non représenté sur les figures) comporte en outre une source d'énergie, un circuit électronique et un calculateur, par exemple de type PID pour contrôler le premier système de régulation thermique comprenant le dispositif de chauffage 11, le deuxième système de régulation thermique comprenant l'autre dispositif de chauffage 12, les capteurs de température 21, 22 et un ou plusieurs capteurs de pression et/ou débit de gaz.

Dans le présent document, le terme "pression de vapeur" désigne la pression exercée par un gaz et est généralement comprise comme désignant une pression de vapeur saturante, c'est-à-dire la pression d'un gaz en équilibre avec sa forme liquide ou solide. De manière connue, la pression de vapeur d'un gaz dépend de la température.

Durant une première phase, le dispositif de chauffage 11 chauffe l'enceinte 30 de manière à ce que la température T1 de l'enceinte soit supérieure d'une valeur prédéterminée à la température de sublimation de l'agent propulsif solide 2, par exemple du diiode, ou respectivement d'évaporation de l'agent propulsif liquide. Ainsi, du gaz 9 se forme dans l'enceinte du réservoir 10. Simultanément, l'autre dispositif de chauffage 12 chauffe plaque 3 et la grille 6. Le premier système de régulation thermique et le deuxième système de régulation thermique fonctionnent de manière à maintenir la température T2 de la grille 6 supérieure ou égale à la température T1 de l'enceinte 30. Cette condition de fonctionnement évite de déposer de l'iode à l'état solide sur la grille 6 pendant cette première phase. Autrement dit, la grille 6 est transparente pour le passage du gaz. Un flux de gaz 20 formé à partir de l'agent propulsif sort du réservoir à travers l'ouverture 4 de la plaque 3. De préférence, dans cette première phase, le premier système de régulation thermique 11 et le deuxième système de régulation thermique 12 sont commandés de manière à chauffer uniformément le réservoir, autrement dit T1≈ T2.

Dans une deuxième phase, on commute l'autre dispositif de chauffage 12 de manière à réduire la température T2 de la grille 6. Par exemple, on arrête l'alimentation en énergie de l'autre dispositif de chauffage 12 tout en maintenant le chauffage de l'enceinte 30 via le dispositif de chauffage 11. La température T2 de la grille 6 baisse rapidement par exemple par rayonnement thermique de la plaque 3. Ainsi, la différence de température (T1 - T2) devient positive. Suite au refroidissement de la plaque 3, la différence de température (T1 - T2) entre le fond 13 du réservoir et la plaque 3 devient supérieure en valeur absolue à un seuil, par exemple de +10 degrés. Lorsque le gaz 9, évaporé ou sublimé dans le réservoir à la pression de vapeur du diiode à la température T1, entre en contact avec les parois relativement plus froides de la grille 6 placée juste devant l'ouverture 4 de sortie de la plaque 3, le diiode se dépose sur la grille 6 et/ou dans le plenum entre la grille 6 et l'ouverture 4. Plus précisément, le gradient de température entre le gaz arrivant sur la grille 6 et la température de la grille 6 est compris entre 5 °C et 50 °C. La vitesse de dépôt ou solidification dépend, d'une part, de la température T2 de la plaque 3 qui détermine la pression de vapeur sur cette plaque, et, d'autre part, de la température T1 du fond 13 du réservoir 1 qui détermine la pression de vapeur du gaz 9 provenant du fond du réservoir. Lorsque cette différence de température (T1-T2) entre le fond et la plaque 3 est suffisante, elle permet de bloquer les orifices de la grille 6 et donc de stopper le flux de gaz 20 à travers l'ouverture 4 de la plaque 3. Plus précisément, le débit de gaz résiduel à travers la grille et l'ouverture devient inférieur à un débit de fuite maximum acceptable, par exemple d'environ un ordre de grandeur inférieur à celui du flux de gaz dans les conditions de déblocage de la grille 6.

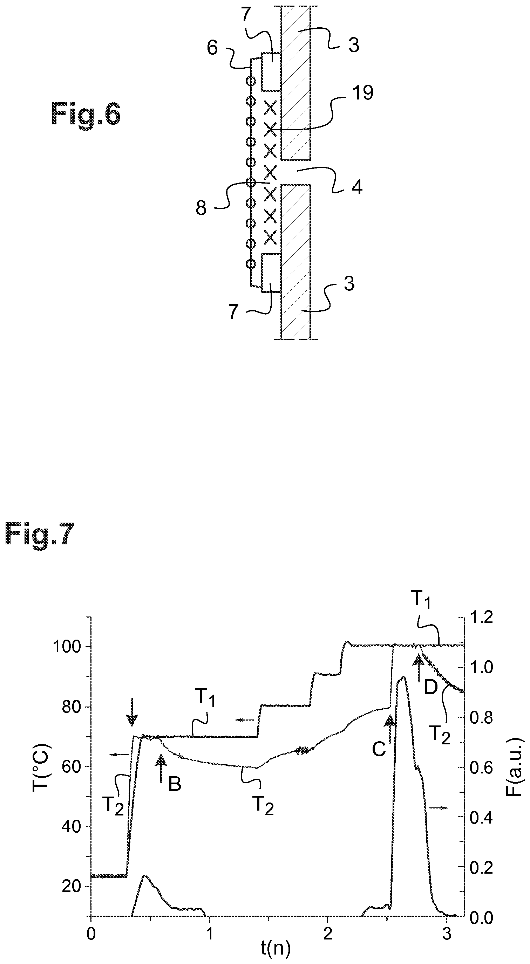

La figure 6 représente une vue de détail de la grille 6 et de l'ouverture 4 suite à cette deuxième phase. La zone de dépôt est située principalement sur la grille 6 et éventuellement dans le plenum entre la grille 6 et l'ouverture 4 de la plaque 3. Un dépôt solide 19, formé par dépôt ou solidification de l'agent propulsif, vient obturer les orifices 16 de la grille 6 face à l'ouverture 4.

Le premier système de régulation thermique 11 et le deuxième système de régulation thermique 12 fonctionnent comme une vanne d'arrêt au niveau de l'ouverture 4 de sortie du réservoir.

Pendant la deuxième phase, la valeur de T1 et la valeur de T2 peuvent évoluer, tant que la différence (T1-T2) reste supérieure à un seuil positif qui a pour effet de produire le dépôt du gaz sur la grille 6 face à l'ouverture 4, de manière à maintenir le blocage de l'ouverture. L'augmentation de la température T1 et/ou la diminution de la température T2 augmentent la différence de température (T1-T2). Cette augmentation la différence de température (T1-T2) peut avoir pour effet de modifier la vitesse du processus de blocage. Par exemple, si T1-T2 augmente, parce-que T2 est réduite, la vitesse de dépôt augmente et le dépôt solide se produit plus rapidement sur la grille 6.

De façon particulièrement avantageuse, pendant la deuxième phase, on utilise un système de refroidissement de la plaque 3 pour accélérer la baisse de la température T2 et ainsi accélérer la vitesse de blocage par dépôt.

Dans une troisième phase, on commute de nouveau le deuxième système de régulation thermique 12 de manière à augmenter la température T2 de la grille 6. Plus précisément, dans cette troisième phase, on amène la température T2 de la grille 6 à être supérieure ou égale à la température T1. Ainsi, la différence de température (T1 - T2) devient inférieure au seuil de dépôt ou solidification. En pratique, la différence de température (T1 - T2) devient négative. Le deuxième système de régulation thermique 12 permet ainsi d'évaporer ou de sublimer le dépôt 19 sur la grille et/ou dans le plenum et/ou dans l'ouverture 4. Cette troisième phase permet ainsi de débloquer rapidement les orifices de la grille 6 pour laisser passer à nouveau le flux de gaz 20 à travers l'ouverture 4 de la plaque 3. Généralement, la température T1 est maintenue constante pour maintenir le débit de gaz une fois la grille débloquée.

De cette manière, la grille 6 combinée avec le premier système de régulation thermique et le deuxième système de régulation thermique fonctionne comme une vanne marche-arrêt (ou « on-off valve ») au niveau de l'ouverture 4 de sortie du réservoir. Le fonctionnement de ce système de commande marche-arrêt du flux de gaz sortant du réservoir est réversible. Il peut être utilisé de nombreuses fois pour ouvrir et fermer à la demande les orifices 16 de la grille 6 devant l'ouverture 4.

La figure 7 représente, sur l'axe des ordonnées à droite du graphique, une mesure du débit massique (F) du flux de gaz 20 en sortie d'un réservoir 1 selon la présente divulgation et mesuré pendant le procédé de commande de température illustré aussi sur la figure 7, relativement à l'axe des ordonnées à gauche du graphique. L'agent propulsif solide utilisé dans cet exemple est du diiode (I₂). On observe le résultat des différentes phases sur la figure 7.

Au repos, entre l'instant initial (t ≈ 0) et l'instant A (t≈ 0,3 h), le dispositif de chauffage 11 et l'autre dispositif de chauffage 12 sont à l'arrêt. Dans cette phase de repos, la température T1 et la température T2 sont égales à la température ambiante d'environ 22°C. Sur la figure 7, lorsque les deux dispositifs de chauffage sont au repos, le débit massique F de gaz est inférieur à un débit de fuite de gaz maximum acceptable et la pression P en sortie du réservoir est inférieure à 0,15 mTorr. La pression en sortie du réservoir de 0.15 mTorr prend en compte la pression de base de la chambre où est injecté le gaz, par exemple ici une chambre à plasma.

Dans la première phase, entre l'instant A (t ≈ 0,3 h) et l'instant B (t ≈ 0,6 h), le dispositif de chauffage 11 chauffe le diiode à une température d'environ 70°C et l'autre dispositif de chauffage 12 chauffe la plaque 3 à la même température d'environ 70°C. Sur la figure 7, pendant la première phase (A-B), la pression P augmente régulièrement, autrement dit, le débit massique F de gaz augmente, indiquant le passage d'un flux de gaz 20 croissant.

A l'instant B (t ≈ 0,6h), on commute le deuxième système de régulation thermique de manière à réduire la température T2 de la plaque d'au moins 10°C par rapport à la température T1 de manière à bloquer les orifices de la grille 6, le plenum face à l'ouverture 4. La deuxième phase s'étend entre l'instant B (t ≈ 0,6h) et l'instant C (t ≈ 2,5h). Sur la figure 7, au début de la deuxième phase (B-C), la pression P baisse ce qui indique un blocage du flux de gaz en sortie du réservoir. Le débit de gaz F redescend en quelques minutes en dessous de la valeur du débit de fuite de gaz maximum acceptable.

Pendant cette deuxième phase, à titre d'exemple non limitatif, le dispositif de chauffage 11 chauffe le diiode à une température T1 croissante par paliers. Simultanément, l'autre dispositif de chauffage 12 chauffe la plaque 3 à une température T2 elle aussi croissante, T2 restant toujours inférieure à T1. Plus précisément, pendant toute cette deuxième phase la différence de température T1 -T2 reste supérieure à +10°C, de manière à maintenir bloqués les orifices de la grille 6. Sur la figure 7, le débit de gaz F reste inférieur à la valeur du débit de fuite de gaz maximum acceptable pendant toute cette deuxième phase.

Dans la troisième phase, à l'instant C (t ≈ 2,5h), l'autre dispositif de chauffage 12 chauffe la plaque de manière à ce que la température T2 de la plaque soit à peu près égale à la température T1 de l'enceinte 30 d'environ 100°C, de préférence avec en plus une marge de température supérieure à 2 ou 3ºC pour éviter tout dépôt solide sur la grille 6. Sur la figure 7, pendant la troisième phase (C-D), on observe une augmentation rapide du débit massique F, en quelques minutes, ce qui correspond au déblocage rapide des orifices 16 de la grille face à l'ouverture de sortie du réservoir.

Dans une quatrième phase, à partir de l'instant D (t ≈ 2,8 h), on commute le deuxième système de régulation thermique de manière à réduire la température T2 de la plaque d'au moins 10°C de manière à bloquer les orifices de la grille. Sur la figure 7, dans la quatrième phase (à partir de l'instant D), on constate une baisse très rapide du débit massique F induite par un nouveau blocage des orifices 16 de la grille face à l'ouverture de sortie du réservoir.

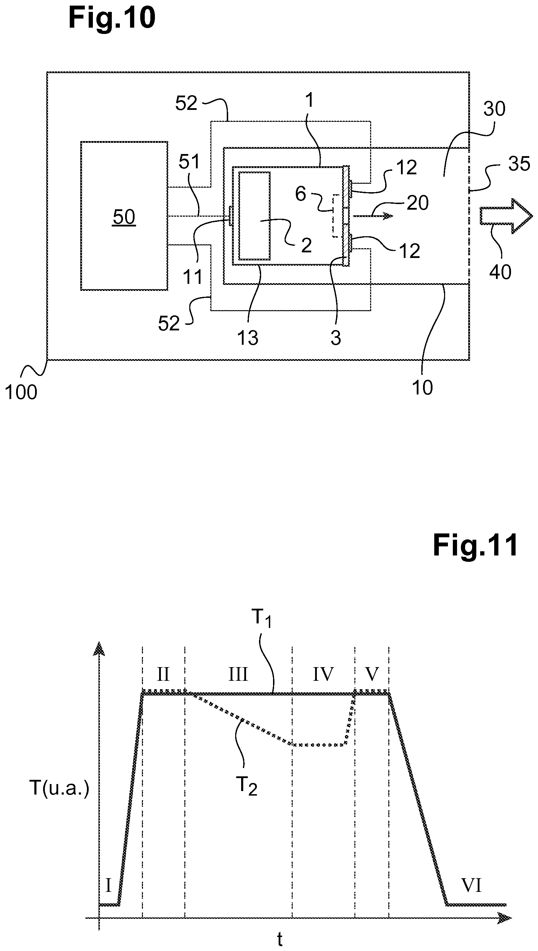

La figure 11 illustre un exemple de courbes de températures de consigne pour la température T1 du réservoir et la température T2 de la plaque 3 de sortie.

**[Tableaux 1]**

| Régime de fonctionnement | Description | |
|---|---|---|
| I | Température am bi ante et état de transiti on | (T1-T2)~ 0 |
| II | Opération, passage duflux de gaz | (T1-T2)~ -2; -3° C |
| III | Principe de déposition dans la grille | (T1-T2) > 0 |
| IV | État de blocage de grille, température stationnaire | (T1-T2) > 0 |
| V | Opération, passage duflux de gaz | (T1-T2)~ -2; -3° C |
| VI | État de transitionjusqu'à la température ambiante | (T1-T2)~ 0 |

Le tableau 1 indique la différence de température T1-T2 pendant les différents régimes de fonctionnement, illustrés sur la figure 11, du système de commande marche-arrêt du flux de gaz en sortie d'un réservoir d'agent propulsif. Au début du régime de fonctionnement I, l'agent propulsif est stocké sous forme liquide ou gazeuse dans le réservoir, la température T1 et la température T2 sont à l'équilibre avec la température ambiante et la différence de température T1-T2 est quasiment nulle. Pendant le régime de fonctionnement I on augmente simultanément la température T1 et la température T2 tout en maintenant la différence de température T1-T2 quasiment nulle. Pendant le régime de fonctionnement II, la température T1 et la température T2 restent quasiment constantes, tout en maintenant la température T2 légèrement supérieure de 2 ou 3 °C par rapport à la température T1, de manière à permettre le passage du flux de gaz à travers la grille et l'ouverture de sortie. Pendant le régime de fonctionnement III, on maintient la température T1 constante et on fait baisser la température T2, la différence de température T1-T2 devenant positive de manière à atteindre une valeur supérieure à un seuil où le gaz forme un dépôt solide sur la grille pour obturer les orifices de la grille. Pendant le régime de fonctionnement IV, on maintient la température T1 constante et la température T2 constante, de manière à maintenir la différence de température T1-T2 positive et supérieure au seuil de dépôt solide sur la grille pour maintenir les orifices bloqués par le dépôt. Puis on augmente la température T2 tout en maintenant constante la température T1, et à atteindre une différence de température T1-T2 légèrement négative de l'ordre -2°C ou -3 °C, autrement dit T2 légèrement supérieure à T1, de manière à sublimer le dépôt sur la grille et permettre à nouveau le passage du flux de gaz à travers l'ouverture de sortie. Pendant le régime de fonctionnement V, on maintient la température T1 constante et la température T2 constante, de manière à maintenir la différence de température T1-T2 négative d'environ -2°C ou -3 °C pour laisser ouvert le passage du flux de gaz à travers la grille et l'ouverture de sortie. Pendant le régime de fonctionnement VI, on réduit simultanément la température T1 et la température T2, la différence de température T1-T2 étant quasiment nulle de manière à stopper la formation de gaz dans le réservoir.

Le système de commande marche-arrêt de la présente divulgation permet de stopper ou limiter fortement les fuites d'agent propulseur lorsque le propulseur est à l'arrêt. Ce système de commande marche-arrêt du flux de gaz sortant du réservoir permet ainsi de protéger une conduite de gaz entre le réservoir et une chambre d'ionisation ou une chambre à plasma, en évitant le blocage d'une conduite de gaz par dépôt de diode. En outre, il permet de limiter la corrosion des parois internes d'une conduite de gaz raccordée à la sortie du réservoir. Ce système de commande marche-arrêt du flux de gaz fonctionne de manière analogue à une vanne marche-arrêt mais est de fabrication et d'utilisation beaucoup plus simple qu'une vanne marche-arrêt pilotée électroniquement. De plus, le système de commande marche-arrêt du flux de gaz limite le risque de bouchage par corrosion associé à une vanne classique. Le système de commande marche-arrêt du flux de gaz de la présente divulgation est en outre très robuste. Le nettoyage de la grille 6 se fait simplement et rapidement par activation du deuxième système de régulation thermique sans nécessiter d'opération de maintenance avec démontage et remontage de pièces mécaniques ou électroniques. En pratique, le système de commande marche-arrêt du flux de gaz de la présente divulgation ne modifie pas l'encombrement global du réservoir, puisqu'il requiert seulement une grille 6 face à l'ouverture de sortie du réservoir et un deuxième système de régulation thermique supplémentaire.

Le système de commande marche-arrêt de la présente divulgation s'adapte à différents types de propulseurs spatiaux, en particulier à un propulseur ionique, à plasma ou à gaz froid. Le système de vanne de la présente divulgation peut être installé face à l'ouverture du réservoir. De façon alternative, le système de vanne de la présente divulgation peut être installé dans une conduite de gaz entre le réservoir et une chambre, par exemple chambre d'ionisation ou chambre à plasma ou entre le réservoir et une tuyère de sortie dans le cas d'un propulseur à gaz froid.

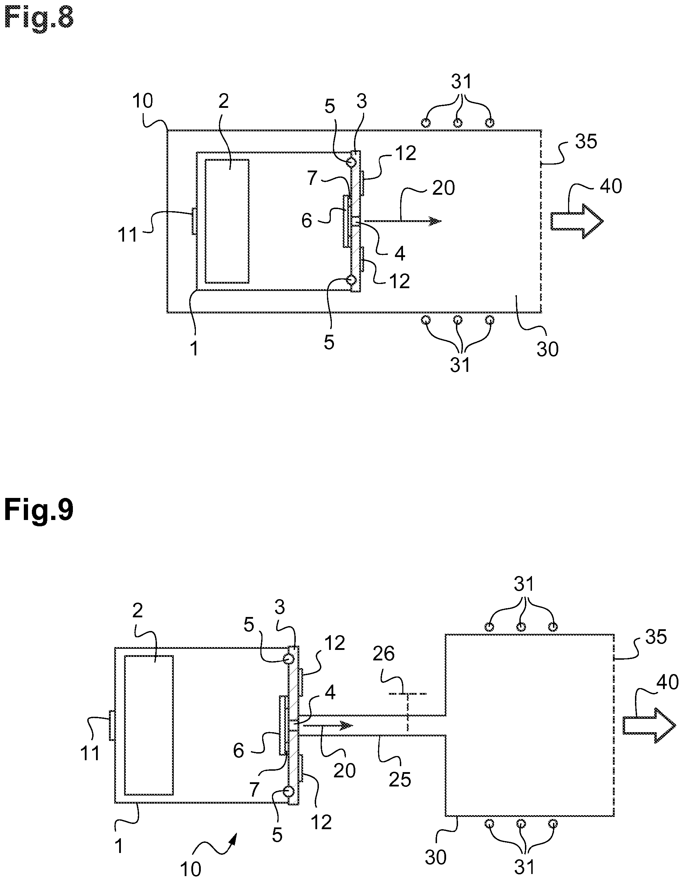

En particulier, l'invention trouve des applications dans un propulseur ionique dans lequel le réservoir est intégré à la chambre à plasma (comme illustré sur la figure 8) ou à distance de la chambre à plasma (comme illustré sur la figure 9).

Le système de commande marche-arrêt du flux de gaz peut aussi être installé sur un propulseur colloïde, à effet Hall ou à effet de champ.

La figure 8 représente une vue en coupe d'un propulseur ionique selon un premier mode de réalisation. Le propulseur ionique 10 comporte un réservoir 1 tel que décrit en lien avec la figure 1. Le réservoir 1 est ici disposé à l'intérieur d'une chambre à plasma 30. Le réservoir 1 comporte notamment une grille 6 disposée face à l'ouverture 4 de sortie du réservoir, un premier système de régulation thermique comprenant un dispositif de chauffage 11 et un deuxième système de régulation thermique comprenant un autre dispositif de chauffage 12 pour chauffer et refroidir indépendamment le fond du réservoir et la plaque 3. Le propulseur ionique 10 comporte en outre un générateur de plasma 31 comprenant par exemple une bobine à induction. Le générateur de plasma 31 est adapté pour générer un plasma dans la chambre à plasma 30 en présence du gaz d'agent propulsif provenant du réservoir 1, à une pression et une température déterminés. Le propulseur ionique 10 comporte en outre un système d'extraction 35 d'un faisceau de particules chargées 40. Le faisceau de particules chargées 40 comprend au moins des ions extraits du plasma. Le système de commande marche-arrêt du flux de gaz s'intègre aisément à l'intérieur du propulseur ionique 10 illustré sur la figure 8 sans modifier significativement son encombrement et son poids global.

La figure 9 représente une vue en coupe d'un propulseur ionique selon un deuxième mode de réalisation. Dans ce mode de réalisation, le réservoir 1 est placé à distance de la chambre à plasma 30 et du générateur de plasma 31. Un conduit de gaz 25 relie l'ouverture de sortie 4 du réservoir 1 à la chambre à plasma 30. En option, une vanne 26 de réglage du débit est placée sur le conduit de gaz 25 de manière à réguler le débit de gaz 20 entrant dans la chambre à plasma 30. Dans ce deuxième mode de réalisation, le système de commande marche-arrêt du flux de gaz permet de bloquer le flux de gaz à l'entrée du conduit de gaz 25 et limite ainsi la corrosion et/ou le bouchage du conduit de gaz induits par une fuite de gaz provenant du réservoir.

Le propulseur ionique de la présente divulgation trouve des applications notamment dans la fabrication d'engins spatiaux, par exemple satellite ou sonde spatiale, de petites dimensions et de faible poids.

La figure 10 représente schématiquement une vue en coupe d'un engin spatial 100 comprenant un propulseur ionique selon l'invention. L'engin spatial 100 comprend une source d'énergie 50, par exemple basée sur des panneaux solaires et un microprocesseur embarqué (non représenté) pour contrôler le fonctionnement du propulseur ionique 10. Un circuit électrique 51, respectivement 52, relie la source d'énergie 50 au premier système de régulation thermique comprenant le dispositif de chauffage 11 et, respectivement au deuxième système de régulation thermique comprenant l'autre dispositif de chauffage 12. Le satellite ou la sonde spatiale permet ainsi de contrôler le flux du gaz sortant du réservoir via le système de commande marche-arrêt de la présente divulgation.

Bien entendu, diverses autres modifications peuvent être apportées à l'invention dans le cadre des revendications annexées.

## Revendications

1. Réservoir (1) de propulseur, le réservoir (1) étant adapté pour stocker un agent propulsif (2) solide ou liquide, le réservoir (1) comprenant des moyens pour former un gaz (9) à partir de l'agent propulsif (2) solide ou liquide dans le réservoir, le réservoir (1) comportant une ouverture (4) de surface S pour extraire du réservoir (1) un flux (20) du gaz (9) d'agent propulsif **caractérisé en ce que** le réservoir (1) comporte un système de commande marche-arrêt du flux de gaz (9) comprenant une grille (6) disposée face à l'ouverture (4) du réservoir (1), un premier système de régulation thermique (11, 21) adapté pour réguler la température du gaz (9) dans le réservoir et un deuxième système de régulation thermique (12, 22) adapté pour réguler la température de la grille (6), la grille (6) comportant des orifices (16) de surface totale supérieure à la surface S de l'ouverture (4) du réservoir (1), les premier et deuxième systèmes de régulation thermique (11, 21, 12, 22) étant configurés pour ajuster une différence de température entre la température du gaz (9) dans le réservoir (1) et la température de la grille (6), la différence de température étant variable entre une première valeur supérieure à un seuil adapté pour transmettre le flux de gaz à travers la grille (6) et une deuxième valeur inférieure à un autre seuil où le gaz forme un dépôt solide sur la grille (6) pour obturer les orifices (16) de la grille (6).

2. Réservoir (1) selon la revendication 1 dans lequel le premier système de régulation thermique (11, 21) comprend un dispositif de chauffage (11) adapté pour chauffer le réservoir (1) et/ou dans lequel le deuxième système de régulation thermique (12, 22) comprend un autre dispositif de chauffage (12) adapté pour chauffer la grille (6).

3. Réservoir (1) selon la revendication 1 ou 2 dans lequel le deuxième système de régulation thermique (12, 22) comporte un dispositif de refroidissement de la grille.

4. Réservoir (1) selon l'une des revendications 1 à 3 dans lequel le réservoir (1) comporte une enceinte (30) et une plaque (3), un dispositif (5) d'étanchéité et d'isolation thermique disposé entre l'enceinte (30) et la plaque (3), la plaque (3) comportant l'ouverture (4) du réservoir (1), la grille (6) étant fixée à la plaque (3).

5. Réservoir (1) selon l'une des revendications 1 à 4 dans lequel la grille (6) est une grille à mailles filaire ou dans lequel la grille comporte une lame comprenant les orifices (16).

6. Réservoir (1) selon la revendication 5 dans lequel les orifices (16) présentent une rugosité de surface adaptée pour le dépôt solide d'agent propulsif.

7. Réservoir (1) selon la revendication 5 ou 6 dans lequel les orifices (16) ont une distribution spatiale suivant un réseau périodique ou une distribution spatiale variable radialement.

8. Réservoir (1) selon l'une des revendications 1 à 7 dans lequel l'agent propulsif (2) comporte un composant choisi parmi les composants suivants : diiode, bismuth, césium, cadmium, étain, indium, gallium, germanium, lithium, mercure, de l'adamantane, du ferrocène, de l'arsenic, du polychlorure de vinyle, du polyimide ou du polytétrafluoroéthylène.

9. Propulseur comprenant un réservoir (1) selon l'une des revendications 1 à 8, le propulseur étant choisi parmi les types de propulseur suivants : propulseur ionique, à plasma, à gaz froid, colloïde, à effet Hall ou à effet de champ.

10. Propulseur selon la revendication 9 dans lequel le propulseur étant respectivement de type ionique, à plasma ou à gaz froid, le réservoir (1) est séparé d'une chambre d'ionisation ou d'une chambre à plasma ou d'une tuyère de sortie respectivement, une conduite de gaz reliant le réservoir à la chambre d'ionisation ou la chambre à plasma ou la tuyère de sortie, respectivement.

11. Propulseur selon la revendication 9 dans lequel le réservoir (1) est intégré dans une chambre à plasma ou une chambre d'ionisation.

12. Engin spatial comprenant un propulseur selon l'une des revendications 9 à 11.

## Patentansprüche

1. Treibstofftank (1) für einen Antrieb, wobei der Treibstofftank (1) dazu ausgelegt ist, ein festes oder flüssiges Antriebsmittel (2) zu lagern, wobei der Treibstofftank (1) Mittel zum Bilden eines Gases (9) aus dem festen oder flüssigen Antriebsmittel (2) im Treibstofftank (1) aufweist, wobei der Treibstofftank (1) eine Öffnung (4) mit der Fläche S aufweist, um aus dem Treibstofftank (1) einen Fluß (20) des Gases (9) des Antriebsmittels zu entnehmen, **dadurch gekennzeichnet, daß** der Treibstofftank (1) ein Ein/Aus-Steuerungssystem des Flusses des Gases (9) aufweist, das ein vor der Öffnung (4) des Treibstofftanks (1) angeordnetes Gitter (6), ein zum Regeln der Temperatur des Gases (9) im Treibstofftank ausgelegtes erstes thermisches Regelungssystem (11, 21) und ein zum Regeln der Temperatur des Gitters (6) ausgelegtes zweites thermisches Regelungssystem (12, 22) aufweist, wobei das Gitter (6) Löcher (16) mit einer Gesamtfläche, die größer als die Fläche S der Öffnung (4) des Treibstofftanks (1) ist, aufweist, wobei das erste und das zweite thermische Regelungssystem (11, 21, 12, 22) dazu ausgelegt sind, einen Temperaturunterschied zwischen der Temperatur des Gases (9) im Treibstofftank (1) und der Temperatur des Gitters (6) einzustellen, wobei der Temperaturunterschied zwischen einem ersten Wert, der größer als ein zum Hindurchführen des Gasflusses durch das Gitter (6) geeigneter Schwellenwert ist, und einem zweiten Wert, der kleiner als ein anderer Schwellenwert ist, bei dem das Gas auf dem Gitter (6) eine feste Ablagerung zum Verschießen des Löcher (16) des Gitters (6) bildet, veränderbar ist.

2. Treibstofftank (1) gemäß Anspruch 1, bei dem das erste thermische Regelungssystem (11, 21) eine zum Heizen des Treibstofftanks (1) geeignete Heizvorrichtung (11) aufweist und/oder bei dem das zweite thermische Regelungssystem (12, 22) eine zum Heizen des Gitters (6) geeignete weitere Heizvorrichtung (12) aufweist.

3. Treibstofftank (1) gemäß Anspruch 1, bei dem das zweite thermische Regelungssystem (12, 22) eine Vorrichtung zum Abkühlen des Gitters aufweist.

4. Treibstofftank (1) gemäß einem der Ansprüche 1 bis 3, bei dem der Treibstofftank (1) ein Gehäuse (30) und eine Platte (3) und eine zwischen dem Gehäuse (30) und der Platte (3) angeordnete Vorrichtung (5) zum Abdichten und thermischen Isolieren aufweist, wobei die Platte (3) die Öffnung (4) des Treibstofftanks (1) aufweist, wobei das Gitter (6) an der Platte (3) befestigt ist.

5. Treibstofftank (1) gemäß einem der Ansprüche 1 bis 4, bei dem das Gitter (6) ein Gitter aus fadenartigen Maschen ist oder bei dem das Gitter eine die Löcher (16) aufweisende Lamelle ist.

6. Treibstofftank (1) gemäß Anspruch 5, bei dem die Löcher (16) eine für die feste Ablagerung von Antriebsmittel geeignete Oberflächenrauhigkeit aufweisen.

7. Treibstofftank (1) gemäß Anspruch 5 oder 6, bei dem die Löcher (16) eine räumliche Verteilung gemäß einem periodischen Gitter oder eine radial variable räumliche Verteilung haben.

8. Treibstofftank (1) gemäß einem der Ansprüche 1 bis 7, bei dem das Antriebsmittel (2) eine Komponente aufweist, die unter den folgenden Komponenten ausgewählt ist: Dijod, Wismut, Zäsium, Kadmium, Zinn, Indium, Gallium, Germanium, Lithium, Merkur, Adamantan, Ferrocen, Arsen, Polyvinylchlorid, Polyimid oder Polytetafluoräthylen.

9. Antrieb mit einem Treibstofftank (1) gemäß einem der Ansprüche 1 bis 8, wobei der Antrieb unter den folgenden Antriebstypen ausgewählt ist: Ionenantrieb, Plasmaantrieb, Kaltgasantrieb, Halleffektantrieb oder Feldeffektantrieb.

10. Antrieb gemäß Anspruch 9, bei dem, wenn der Antrieb vom Typ eines Ionenantriebs, eines Plasmaantriebs beziehungsweise eines Kaltgasantriebs ist, der Treibstofftank (1) von einer Ionisierungskammer oder einer Plasmakammer oder einem Austrittsrohr getrennt ist, eine Gasleitung den Treibstofftank entsprechend mit der Ionisierungskammer oder der Plasmakammer oder dem Austrittsrohr verbindet.

11. Antrieb gemäß Anspruch 9, bei dem der Treibstofftank (1) in einer Plasmakammer oder einer Ionisierungskammer integriert ist.

12. Raumfahrzeug mit einem Antrieb gemäß einem der Ansprüche 9 bis 11.

## Claims

1. A thruster tank (1), the tank (1) being adapted to store a solid or liquid propellant (2), the tank (1) comprising means for forming a gas (9) from the solid or liquid propellant (2) in the tank, the tank (1) including an opening (4) of surface area S for extracting a flow (20) of the propellant gas (9) from the tank (1), **characterized in that** the tank (1) includes a system for on-off control of the flow of gas (9), comprising a grid (6) arranged opposite the opening (4) of the tank (1), a first thermal regulation system (11, 21) suitable for regulating the temperature of the gas (9) in the tank and a second thermal regulation system (12, 22) suitable for regulating the temperature of the grid (6), the grid (6) including holes (16) of total surface area greater than the surface area S of the opening (4) of the tank (1), the first and second thermal regulation systems (11, 21, 12, 22) being configured to adjust a temperature difference between the temperature of the gas (9) in the tank (1) and the temperature of the grid (6), the temperature difference being variable between a first value higher than a threshold adapted for transmitting the gas flow through the grid (6) and a second value lower than another threshold where the gas forms a solid deposit on the grid (6) to obstruct the holes (16) of the grid (6).

2. The tank (1) according to claim 1, wherein the first thermal regulation system (11, 21) comprises a heating device (11) suitable for heating the tank (1) and/or wherein the second thermal regulation system (12, 22) comprises another heating device (12) suitable for heating the grid (6).

3. The tank (1) according to claim 1 or 2, wherein the second thermal regulation system (12, 22) includes a device for cooling the grid.

4. The tank (1) according to any one of claims 1 to 3, wherein the tank (1) includes a case (30) and a plate (3), a sealing and thermal insulation device (5) arranged between the case (30) and the plate (3), the plate (3) including the opening (4) of the tank (1), the grid (6) being fastened to the plate (3).

5. The tank (1) according to any one of claims 1 to 4, wherein the grid (6) is a wire mesh grid or wherein the grid includes a blade comprising the holes (16).

6. The tank (1) according to claim 5, wherein the holes (16) have a surface roughness adapted for the solid deposit of the propellant.

7. The tank (1) according to claim 5 or 6, wherein the holes (16) have a spatial distribution according to a periodic array or a spatial distribution varying radially.

8. The tank (1) according to any one of claims 1 to 7, wherein the propellant (2) includes a component chosen among the following components: diiodine, bismuth, cesium, cadmium, tin, indium, gallium, germanium, lithium, mercury, adamantane, ferrocene, arsenic, polyvinyl chloride, polyimide or polytetrafluoroethylene.

9. A thruster comprising a tank (1) according to any one of claims 1 to 8, the thruster being chosen among the following thruster types: ion, plasma, cold-gas, colloid, Hall-effect or field-effect thruster.

10. The thruster according to claim 9, wherein, the thruster being of the ion, plasma or cold-gas type, respectively, the tank (1) is separated from an ionization chamber or a plasma chamber or an outlet nozzle, respectively, a gas pipe connecting the tank to the ionization chamber or the plasma chamber or the outlet nozzle, respectively.

11. The thruster according to claim 9, wherein the tank (1) is integrated into a plasma chamber or an ionization chamber.

12. A space craft comprising a thruster according to any one of claims 9 to 11.
